(19) Europäisches Patentamt
European Patent Office
Office européen des brevets

(11) **EP 3 521 774 B1**

(12) **EUROPÄISCHE PATENTSCHRIFT**

(45) Veröffentlichungstag und Bekanntmachung des Hinweises auf die Patenterteilung:
**01.04.2020 Patentblatt 2020/14**

(51) Int Cl.:
***G01F 1/66*** *(2006.01)*

(21) Anmeldenummer: **18155305.8**

(22) Anmeldetag: **06.02.2018**

(54) **ULTRASCHALL-DURCHFLUSSMESSVORRICHTUNG UND VERFAHREN ZUM BESTIMMEN DER STRÖMUNGSGESCHWINDIGKEIT**

ULTRASOUND FLOW METER AND METHOD FOR DETERMINING THE FLOW SPEED

DISPOSITIF DE MESURE D'ÉCOULEMENT À ULTRASONS ET PROCÉDÉ DE DÉTERMINATION DE LA VITESSE D'ÉCOULEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**07.08.2019 Patentblatt 2019/32**

(73) Patentinhaber: **SICK Engineering GmbH 01458 Ottendorf-Okrilla (DE)**

(72) Erfinder:
• **Nerowski, Dr. Alexander**
**01277 Dresden (DE)**
• **Oberländer, Martin**
**01099 Dresden (DE)**

(74) Vertreter: **Hehl, Ulrich**
**SICK AG**
**Intellectual Property**
**Erwin-Sick-Strasse 1**
**79183 Waldkirch (DE)**

(56) Entgegenhaltungen:
DE-A1-102005 047 790    DE-A1-102013 101 950
US-A1- 2002 053 243    US-A1- 2013 174 669
US-B1- 7 658 114

**Beschreibung**

Die Erfindung betrifft eine Ultraschall-Durchflussmessvorrichtung und ein Verfahren zum Bestimmen der Strömungsgeschwindigkeit eines in einer Leitung strömenden Fluids nach dem Oberbegriff von Anspruch 1 beziehungsweise 11.

Ein bewährtes Verfahren zum Messen der Strömungsgeschwindigkeit oder des Durchflusses ist das Differenzlaufzeitverfahren. Dabei wird ein Paar Ultraschallwandler am Außenumfang der Rohrleitung mit einem gegenseitigen Versatz in Längsrichtung montiert, die quer zu der Strömung entlang des zwischen den Ultraschallwandlern aufgespannten Messpfades wechselseitig Ultraschallsignale aussenden und registrieren. Die durch das Fluid transportierten Ultraschallsignale werden je nach Laufrichtung durch die Strömung beschleunigt oder abgebremst. Die resultierende Laufzeitdifferenz wird mit geometrischen Größen zu einer mittleren Strömungsgeschwindigkeit des Fluids verrechnet. Mit der Querschnittsfläche ergibt sich daraus der Volumenstrom oder Durchfluss. Für genauere Messungen können auch mehrere Messpfade mit jeweils einem Paar Ultraschallwandler vorgesehen sein, um einen Strömungsquerschnitt genauer zu erfassen.

Die zur Erzeugung des Ultraschalls eingesetzten Ultraschallwandler weisen einen Schwingkörper auf, häufig eine Keramik. Mit dessen Hilfe wird beispielsweise auf Basis des piezoelektrischen Effekts ein elektrisches Signal in Ultraschall gewandelt und umgekehrt. Je nach Anwendung arbeitet der Ultraschallwandler als Schallquelle, Schalldetektor oder beides. Dabei muss für eine Kopplung zwischen dem Fluid und dem Ultraschallwandler gesorgt werden. Eine verbreitete Lösung besteht darin, die Ultraschallwandler mit direktem Kontakt zum Fluid in die Leitung hineinzuführen. Solche intrusiven Sonden können jedoch genaue Messungen durch Störung der Strömung erschweren. Umgekehrt sind die eintauchenden Ultraschallwandler dem Fluid und dessen Druck und Temperatur ausgesetzt und werden dadurch womöglich beschädigt oder verlieren durch Ablagerungen ihre Funktion.

Grundsätzlich sind auch Techniken bekannt, bei denen die Innenwand vollständig geschlossen bleibt. Ein Beispiel ist die sogenannte Clamp-On-Montage etwa gemäß US 4 467 659, mit der Ultraschallwandler von außen an der Leitung befestigt werden. Damit können aber nur diametrale Messpfade durch die Rohrachse realisiert werden, wodurch bei nicht axialsymmetrischen Strömungsprofilen zusätzliche Fehler erzeugt werden.

Die EP 1 378 272 B1 schlägt vor, die Ultraschall erzeugenden Elemente an einer Außenseite einer Wandung anzubringen. Im Gegensatz zur Clamp-On-Technik wird dabei der Ultraschallwandler gleichsam in die Wandung integriert. In dem Bereich der Ultraschallwandler wird eine Tasche mit erheblich geringerer Wandstärke als die restliche Wandung geformt, und die verbleibende Wandstärke bildet die Membran des Ultraschallwandlers. Diese auch als Clamp-In bezeichnete Montage ist gewissermaßen eine Zwischenform der festen Montage im Innenraum der Leitung und der Clamp-On-Montage.

Die Ultraschallwandler erzeugen neben dem Fluidschall immer auch durch die Leitungswand übertragenen Körper- beziehungsweise Strukturschall. Der Strukturschall ist eine Störgröße, denn er bleibt unbeeinflusst durch das Fluid und dessen Strömung, enthält also die gewünschte Messinformation nicht, und ist dem Messsignal zeitlich überlagert. Bei intrusiven Sonden kann der Strukturschall durch konstruktive Dämpfungsstrukturen minimiert werden, die den Ultraschallwandler von der Leitung akustisch entkoppeln. Das ist bei einer Clamp-On- oder Clamp-In-Montage, in der Ultraschallsignale durch die Leitungswand übertragen werden oder sogar gezielt einen Teil der Leitungswand anregen, nicht mehr möglich. Strukturschall lässt sich auch nicht durch klassische algorithmische Filterverfahren vom Fluidschall trennen, da die Frequenzen von Struktur- und Fluidschall übereinstimmen.

Die DE 20 2013 105 800 U1 offenbart eine Ultraschallmessvorrichtung mit Ultraschallwandlern in Clamp-In-Montage. Um die Ausbreitung von Strukturschall zu unterdrücken, sind in der Leitungswand Dämpfungsbereiche mit Streuzentren beispielsweise in Form von Schweißnähten vorgesehen. Damit lässt sich aber der Störeffekt durch Strukturschall bestenfalls ein wenig reduzieren, grundsätzlich bleibt die Problematik bestehen.

Die US 7 658 114 B1 offenbart eine Ultraschall-Durchflussmessvorrichtung mit zwei hintereinander angeordneten Messpfaden, wobei die beiden Messpfade einen unterschiedlichen Winkel zur Strömungsrichtung bilden. Es wird jeweils die Laufzeit zu dem Empfänger in Strömungsrichtung gemessen, und aus diesen beiden Laufzeiten wird unter Einbeziehung von geometrischen Informationen die Strömungsgeschwindigkeit bestimmt.

In der US 2013/0174669 A1 wird ein ganz ähnlicher Grundaufbau verwendet. Hier wird aber zusätzlich zu den beiden Laufzeiten auf den beiden Messpfaden in Strömungsrichtung auch auf dem steileren Messpfad die Laufzeit auf dem Rückweg gegen die Strömungsrichtung gemessen, und die Strömungsgeschwindigkeit wird auf verschiedene Weisen aus den insgesamt drei gemessenen Laufzeiten bestimmt.

Aus der DE 10 2005 047 790 A1 ist ein mehrkanaliges Ultraschall-Durchflussmessgerät bekannt, bei dem mehrere Ultraschallpfade unterschiedlicher Länge vorgesehen sind. Die sendenden Ultraschallsensoren werden zeitgleich angesteuert, und aufgrund der unterschiedlichen Pfadlängen werden die Ultraschallsignale zeitversetzt detektiert.

Es ist daher Aufgabe der Erfindung, die Messgenauigkeit eines Ultraschall-Durchflussmessers zu verbessern.

Diese Aufgabe wird durch eine Ultraschall-Durchflussmessvorrichtung und ein Verfahren zum Bestimmen der Strömungsgeschwindigkeit eines in einer Leitung strömenden Fluids nach Anspruch 1 beziehungsweise 11 gelöst. Die Ultraschall-Durchflussmessvorrichtung ist im Prinzip ein Mehrpfadzähler und misst dementsprechend mit einem Differenzlaufzeitverfahren an mehreren Messpfaden, die jeweils von zwei Ultraschallwandlern aufgespannt werden. Die Ultraschallwandler eines Messpfades sind an diametral oder radial versetzt gegenüberliegenden Leitungswänden angeordnet, so dass die Messpfade durch das Fluid verlaufen. Außerdem sind die Ultraschallwandler mit einem axialen Abstand, also in longitudinaler Richtung der Leitung, zueinander versetzt, damit der Verlauf des Messpfads eine Komponente mit und gegen die Strömung aufweist. Die Strömungsgeschwindigkeit wird aus Laufzeitdifferenzen längs der mehreren Messpfade berechnet.

Die Erfindung geht nun von dem Grundgedanken aus, die mehreren Pfade nicht wie sonst bei einem Mehrpfadzähler üblich in dieselbe Querschnittsebene zu legen, sondern ihnen einen unterschiedlichen axialen Versatz zu geben. Ein herkömmlicher Mehrpfadzähler versucht, eine ungleichmäßige Strömung durch Mehrfachabtastung desselben Querschnitts an mehreren Stellen genauer zu vermessen. Erfindungsgemäß geht es um darum, Messpfade zu schaffen, in denen das Verhältnis der Ausbreitungswege für Fluidschall und Strukturschall variiert, und das bei möglichst gleichem Strömungsverhalten für diese Messpfade. Das schafft die Voraussetzung dafür, in der Auswertung die Effekte des Strukturschalls zu kompensieren. Diese Variation wird über den axialen Abstand erreicht.

Die Erfindung hat den Vorteil, dass eine viel genauere Messung möglich wird. Durch die spezielle Anordnung von Ultraschallwandlern und Messpfaden, insbesondere mit einer noch zu erläuternden zugehörigen Signalverarbeitung, wird das gewünschte Messsignal wesentlich besser erfassbar, der Einfluss des Strukturschalls auf die Messung der Laufzeitdifferenz kompensiert und damit die systematische Unsicherheit der Durchflussmessung deutlich reduziert.

Die Messpfade sind bevorzugt in einer gemeinsamen, zu der Leitung parallelen Ebene angeordnet. Eine solche Ebene kann auch als longitudinale Ebene bezeichnet werden. In einer Querschnittsansicht liegen die Messpfade folglich übereinander, und sie haben denselben Sekantenwinkel, der den Winkelversatz von einem diametralen Verlauf beschreibt. Es sei nochmals betont, dass die Messpfade anders angeordnet sind als in einem herkömmlichen Mehrpfadzähler. Messpfade in einer gemeinsamen longitudinalen Ebene tasten praktisch denselben Strömungsbereich ab, jedoch mit unterschiedlichem axialem Abstand. Es wäre denkbar, weitere Gruppen von Messpfaden in jeweils anderen longitudinalen Ebenen vorzusehen, mit unterschiedlichen axialen Abständen innerhalb der Gruppe. Das entspräche dann der Abtastung eines Strömungsprofils wie bei einem herkömmlichen Mehrpfadzähler, wobei die herkömmlichen Messpfade durch eine erfindungsgemäße Gruppe von Messpfaden innerhalb derselben longitudinalen Ebene ersetzt sind. In dieser Beschreibung wird fast überall nur auf eine Gruppe von Messpfaden Bezug genommen, die gemeinsam praktisch einen einzelnen Messpfad eines herkömmlichen Mehrpfadzählers bildet, wobei die Möglichkeit mehrerer Gruppen stets gegeben ist.

Vorzugsweise sind die Messpfade unmittelbar hintereinander angeordnet. Das Ziel der erfindungsgemäßen Anordnung von Messpfaden ist, möglichst nur den axialen Abstand zu variieren. Die übrigen Bedingungen und vor allem das Strömungsverhalten sollten für diese Messpfade im Idealfall identisch bleiben. Wenn man die Messpfade möglichst dicht hintereinander anordnet, d.h. in longitudinaler Richtung parallel zur Leitungsachse, wird dies zumindest annähernd erreicht, weil sich die Strömung auf dem kurzen Strömungsweg dazwischen praktisch nicht ändert.

Die Messpfade bilden vorzugsweise gemeinsam eine Sägezahnform. Eine solche Sägezahn- oder Zickzackform ist eine besonders günstige Anordnung, die es ermöglicht, sehr ähnliche oder praktisch gleiche Strömungsabschnitte in einem kompakten Messpfadlayout zu überwachen. Die Sägezähne sind nicht ganz gleich groß, da ja der axiale Abstand variiert werden soll.

Ultraschallwandler an Spitzen der Sägezahnform sind vorzugsweise an beiden angrenzenden Messpfaden beteiligt. Das kann naturgemäß für die beiden Ultraschallwandler am Rand, also am Anfang und Ende der Sägezahnform, nicht gelten. Die mittleren Ultraschallwandler können aber bei hinreichend großem Abstrahlwinkel Messpfade in zwei Richtungen aufspannen, so dass insgesamt weniger Ultraschallwandler benötigt werden, nämlich insbesondere nur n+1 Ultraschallwandler für n Messpfade. Die Ultraschallwandler werden ohnehin vorzugsweise zeitversetzt angesteuert, weil sonst die Messungen einander stören würden, so dass der Doppeleinsatz eines Ultraschallwandlers in zwei Messpfaden keine zusätzlichen Einschränkungen bedeutet.

Die Auswertungseinheit ist erfindungsgemäß dafür ausgebildet, mindestens eine charakteristische Größe einer Funktion, welche die eine Oszillation bildende Abhängigkeit der Laufzeit oder Laufzeitdifferenz von dem axialen Abstand der Ultraschallwandler beschreibt, aus den mehreren Messungen an den mehreren Messpfaden durch lineare Anpassung oder Rekonstruktion der Oszillation zu schätzen, und aus der charakteristischen Größe die Strömungsgeschwindigkeit zu berechnen. Die Erfindung hat erkannt, dass ein Fehler, den der überlagerte Strukturschall in der gemessenen Laufzeitdifferenz verursacht, mit dem axialen Abstand der Ultraschallwandler variiert, die den jeweiligen Messpfad aufspannen. Die Laufzeitdifferenz nimmt nicht monoton mit dem axialen Abstand zu, sondern es bildet sich eine Oszillation aus. Der Ansatz der erfindungsgemäßen Auswertung ist, die Funktion der Laufzeitdifferenz in Abhängigkeit vom axialen Abstand zu betrachten und die Oszillation zu korrigieren. Die Funktion wird durch die mehreren Messpfade an mehreren Stützpunkten erfasst, nämlich den mehreren axialen Abständen. Daraus kann die Funktion geschätzt und der Fehler kompensiert werden. Es ist dafür nicht zwingend erforderlich, die gesamte Funktion zu rekonstruieren, sondern zunächst nur mindestens eine charakteristische Größe davon, etwa die Steigung einer Ausgleichsgeraden. Das Ergebnis ist ein verbessertes Messergebnis, das insbesondere zumindest weitgehend um systematische Störeffekte durch Strukturschall bereinigt ist. Die zugrunde liegende Auswertung findet auf Messwertebene statt und ist daher verglichen mit Methoden auf Signalebene mathematisch sehr einfach und zudem extrem ressourcenschonend, da bereits die klassische Laufzeitmessung höhere Ansprüche an die Gerätehardware stellt. Alternativ zu einer Kompensation der Laufzeitdifferenzen ist auch denkbar, schon die Laufzeiten selbst zu korrigieren und daraus dann wie üblich die Laufzeitdifferenz zu bestimmen.

Die Auswertungseinheit ist dabei für eine lineare Anpassung der Funktion ausgebildet. Eine lineare Anpassung ist mit vergleichsweise wenig Aufwand möglich, genügt aber für die Korrektur der Oszillation. Dies ist also ein Beispiel einer charakteristischen Größe der Funktion. Der noch verbleibende Restfehler hängt maßgeblich von der Anzahl der Messpfade ab, wodurch sich eine hohe Skalierbarkeit bezüglich der Genauigkeit und der Kosten der Ultraschall-Durchflussmessvorrichtung ergibt. Die Auswertung ist risikofrei, denn selbst bei nicht geeigneten Messpfadkonfigurationen, in denen beispielsweise alle Messpfade den gleichen axialen Abstand aufweisen, ergibt sich einfach nur eine Mittelung der Einzelmessungen. Alternativ zu einer linearen Anpassung ist es erfindungsgemäß auch denkbar, zu versuchen, die Oszillation insgesamt zu rekonstruieren. Das ist aber deutlich aufwändiger, benötigt mehr Messpfade, um zusätzliche Stützstellen zu gewinnen, und verspricht trotzdem nicht unbedingt bessere Ergebnisse.

Die Auswertungseinheit ist bevorzugt dafür ausgebildet, für die lineare Anpassung bei verschwindendem axialem Abstand auch eine verschwindende Laufzeitdifferenz anzunehmen. Damit wird ohne Messung ein zusätzlicher Stützpunkt gewonnen, beziehungsweise die konstante Verschiebung der gesuchten Gerade ist von vorneherein zu Null bestimmt. Das ist auch eine sinnvolle, nicht nähernde oder gar verfälschende Annahme, denn der Ultraschall bewegt sich auf einem solchen hypothetischen Messpfad senkrecht zur Strömung und sollte daher in beiden Richtungen gleich lange brauchen. Bei einer alternativen Kompensation schon auf Ebene von Laufzeiten, nicht Laufzeitdifferenzen, gilt diese Annahme natürlich nicht, denn die Laufzeiten selbst werden nicht verschwinden, sondern nur gleich lang.

Die Auswertungseinheit ist bevorzugt dafür ausgebildet, eine kompensierte Laufzeit oder Laufzeitdifferenz aus der linearen Anpassung bei einem axialen Abstand zu bestimmen, welcher einem Mittelwert der axialen Abstände der Messpfade entspricht. Unter idealen Bedingungen enthielte die Funktion beziehungsweise deren lineare Anpassung in jedem Punkt eine gleichwertige Messinformation. Aufgrund von Schwankungen der Messwerte ist sie aber tatsächlich nicht für verschiedene axiale Abstände gleichwertig, und es ist zu erwarten, dass die Information fern von den vermessenen Stützstellen schlechter wird. Besonders geeignet ist also eine Auswertung innerhalb des von Stützstellen erfassten Bereichs, und unter diesen Punkten kann der Mittelwert der axialen Abstände der Messpfade als eindeutig bestimmbarer, gut geeigneter Wert genutzt werden.

Vorzugsweise sind mindestens vier Messpfade vorgesehen. Das bezieht sich wiederum auf die Messpfade, die gemeinsam für eine Rekonstruktion der Oszillation beziehungsweise eine lineare Anpassung verwendet werden. Die mindestens vier Messpfade weisen also den unterschiedlichen axialen Versatz auf und liegen vorzugsweise in derselben longitudinalen Ebene, noch bevorzugter direkt hintereinander. Vier Werte genügen, um eine Oszillation verlässlich zu rekonstruieren beziehungsweise auszugleichen oder linear anzupassen. Weniger Messpfade und damit Werte sind zwar auch denkbar, würden jedoch ohne Zusatzinformationen beispielsweise über die Frequenz der Oszillation die Funktion nur unzureichend erfassen, demnach zusätzliche Fehler einführen. Zusätzliche Messpfade und damit Werte sind rein mathematisch nicht erforderlich, aber durchaus vorteilhaft, weil die Überbestimmung statistische Effekte durch Messfehler, Toleranzen und dergleichen ausgleichen kann. Hier ist eine Abwägung zwischen Aufwand und Genauigkeitsanforderungen zu treffen.

Die Ultraschallwandler sind bevorzugt von außen an die Leitung angebracht. Damit sind zunächst beide Möglichkeiten einer Clamp-On- oder einer Clamp-In-Montage gemeint. Der Vorteil ist, dass das Innere der Leitung ungestört bleibt, und möglicherweise können Ultraschallwandler nach- oder umgerüstet werden, ohne die Leitung zu öffnen. Dabei muss qua Gerätekonzept die Leitung jeweils Ultraschall übertragen oder wird sogar eigens angeregt. Daher ist mit besonders großen Effekten durch den Strukturschall zu rechnen, wobei eine Dämpfung nicht möglich ist, weil dies zugleich den Messeffekt beeinträchtigen würde. Die Erfindung kann jedoch den negativen Einfluss des Strukturschalls auf die Genauigkeit der Laufzeitmessung und damit den systematischen Fehler der Durchflussmessung deutlich reduzieren.

Bevorzugt weist eine Leitungswand der Leitung mehrere Taschen auf, in denen nach innen ein dünnwandiger Bereich verbleibt, wobei die Ultraschallwandler in jeweils einer Tasche angeordnet sind und einen Schwingkörper aufweisen, der an dem dünnwandigen Bereich ankoppelt, der als schwingungsfähige Membran des Ultraschallwandlers wirkt. In dieser Clamp-In-Montage bleibt nicht nur das Innere der Leitung ohne Beeinträchtigung, sondern durch die Anregung des dünnwandigen Bereichs wird auch das Ultraschallsignal sehr gut in das Fluid eingekoppelt. Außerdem sind nicht-diametrale Messpfade möglich.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Messungen einer Laufzeit oder Laufzeitdifferenz längs eines Messpfades werden bevorzugt als Stützstelle einer Funktion aufgefasst, welche die Laufzeit oder Laufzeitdifferenz in Abhängigkeit des axialen Abstands beschreibt. Die Messungen und Messpfade dienen also dazu, die Funktion punktuell zu bestimmen, um damit einen genaueren Messwert mit geringerem systematischem Fehler zu gewinnen. Dazu ist es erfindungsgemäß denkbar, die Funktion aus den Messungen zu rekonstruieren, anzunähern, zu interpolieren oder eine charakteristische Größe der Funktion zu bestimmen.

Vorzugsweise wird eine lineare Anpassung der eine Oszillation bildenden Funktion vorgenommen. Das ist einfach durchzuführen und erzielt zugleich sehr gute Ergebnisse. Insbesondere wird die Strömungsgeschwindigkeit aus einem Wert der Funktion an einem axialen Abstand bestimmt, welcher dem Schwerpunkt der axialen Abstände der Messpfade entspricht. Es wurde bereits erläutert, dass es sinnvoll ist, die Funktion dort zu nutzen beziehungsweise abzulesen, wo sie unter realen Bedingungen mit Messtoleranzen durch die Stützpunkte besonders zuverlässig erfasst ist.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1a  eine schematische Längsschnittansicht einer Leitung zur Erläuterung des Differenzlaufzeitverfahrens zur Durchflussmessung mit Ultraschall;

Fig. 1b  eine schematische Darstellung einer Leitungswand zur Erläuterung der Clamp-in-Montage eines Ultraschallwandlers;

Fig. 1c  eine schematische Querschnittsdarstellung einer Leitung zur Veranschaulichung der Ausbreitung von Körper- oder Strukturschall;

Fig. 2  Darstellungen der Funktion der Laufzeitdifferenz in Abhängigkeit vom axialen Abstand der Ultraschallwandler eines Messpfades (oben) und relativer Fehler zum ungestörten Fall ohne Strukturschall (unten) aus einer einfachen Modellierung;

Fig. 3a  eine Querschnittdarstellung einer erfindungsgemäßen Messpfadkonfiguration;

Fig. 3b  eine Längsschnittdarstellung der erfindungsgemäßen Messpfadkonfiguration gemäß Figur 3a;

Fig. 4  Darstellungen der Funktion der Laufzeitdifferenz in Abhängigkeit vom axialen Abstand der Ultraschallwandler und Werte der vier Messpfade für die Messpfadkonfiguration gemäß Figur 3 bei Fluidschallgeschwindigkeiten von 1200m/s (oben) und 2000m/s (unten); und

Fig. 5  eine weitere Darstellung der Funktion der Laufzeitdifferenz in Abhängigkeit vom axialen Abstand der Ultraschallwandler mit den Werten von sieben Messpfaden in einer weiteren Messpfadkonfiguration.

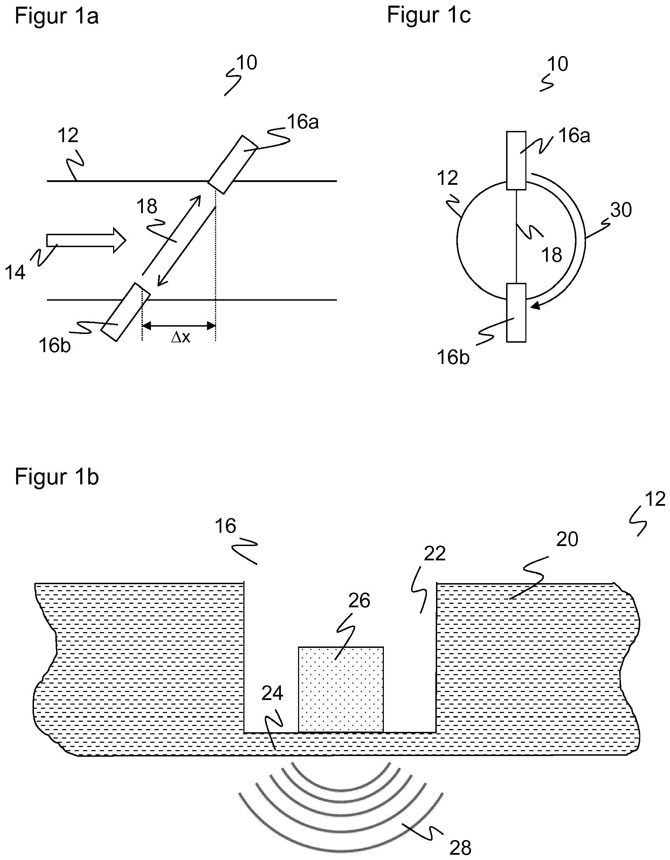

Figur 1 zeigt in einer Längsschnittansicht einen Ultraschall-Durchflussmesser 10 nach dem Differenzlaufzeitverfahren, der an einer Leitung 12 montiert ist. Ein Fluid durchströmt die Leitung 12 in der durch den Pfeil 14 bezeichneten Richtung. Ein Paar Ultraschallwandler 16a-b ist an einer Leitungswand angeordnet, um längs eines zwischen den Ultraschallwandlern 16a-b aufgespannten Messpfades 18 ein Ultraschallsignal wahlweise in der einen oder der anderen Richtung auszusenden und zu empfangen. Die sich durch das Fluid fortbewegende akustische Welle wird auch als Fluidschall bezeichnet.

Die beiden Ultraschallwandler 16a-b sind in Längsrichtung der Leitung 12 gegeneinander versetzt, wobei Δx den entsprechenden axialen Abstand bezeichnet. Dadurch bewegt sich der Fluidschall in der einen Richtung mit der Strömung und in der anderen Richtung gegen die Strömung. Daraus ergibt sich eine Laufzeitdifferenz, aus der die Strömungsgeschwindigkeit des Fluids berechnet werden kann. Die bis hierher auch bekannte Auswertung erfolgt in einer nicht dargestellten Steuer- und Auswertungseinheit des Ultraschall-Durchflussmessers 10, die mit den Ultraschallwandlern 16a-b verbunden ist.

Die Leitung 12 im Bereich der Ultraschallmessung bildet einen Messkörper des Ultraschall-Durchflussmessers 10. Die Darstellung ist so gewählt, als sei dieser Messkörper ein integraler Bestandteil der vorhandenen Leitung 12. Das ist prinzipiell möglich, in der Praxis wird aber der Ultraschall-Durchflussmesser 10 mit einem eigenen Messkörper hergestellt, der nach der Montage einen entsprechenden Abschnitt einer vorhandenen Leitung ersetzt und dazu beispielsweise an beiden Seiten mit Flanschverbindungen eingefügt wird.

Figur 1 zeigt stellvertretend nur einen Messpfad 18. Tatsächlich umfasst die Ultraschall-Messvorrichtung mehrere Messpfade 18, auf die weiter unten auch genauer eingegangen wird. Dabei ist zu unterscheiden zwischen mehreren Messpfaden 18, die erfindungsgemäß einen unterschiedlichen axialen Versatz Δx aufweisen, die Strömung aber praktisch an der gleichen Stelle messen, und mehreren Pfaden im herkömmlichen Sinne. In einem herkömmlichen Mehrpfadzähler bilden nämlich mehrere Messpfade ein Layout mit unterschiedlichen Verläufen durch einen Querschnitt der Leitung 12, um bei ungleichmäßiger Strömung oder Vorstörungen eine genauere Messung zu ermöglichen. Das ist erfindungsgemäß auch möglich, wobei dann aber jeweils eine Gruppe von Messpfaden 18 mit unterschiedlichem axialem Versatz Δx einen herkömmlichen Messpfad ersetzt. Im Folgenden wird diese Möglichkeit nicht mehr erwähnt, sondern vereinfachend nur noch eine solche Gruppe von Messpfaden 18 betrachtet, was für eine einigermaßen homogene Strömung auch ausreichend ist und ansonsten eine erste Näherung für eine kompliziertere Strömung bildet.

Figur 1b zeigt eine schematische Darstellung einer Leitungswand 20 der Leitung 12 zur Erläuterung der Clamp-in-Montage eines Ultraschallwandlers 16. Die Clamp-In-Montage macht in besonderem Maße Gebrauch von den erfindungsgemäßen Vorteilen, aber es ist alternativ auch eine Clamp-On und möglicherweise sogar eine herkömmliche intrusive Wandlermontage denkbar.

Bei der Clamp-In-Montage wird in der Leitungswand 20 ein Hohlraum oder eine Tasche 22 ausgebildet. Nach innen hin verbleibt im Bereich der Tasche 22 von der Leitungswand 20 ein dünnwandiger Teilbereich 24, der zugleich als Membran des Ultraschallwandlers 16 dient und von dessen Schwingkörper 26, beispielsweise einer Piezokeramik, zum Schwingen angeregt wird, um ein Ultraschallsignal auszusenden, beziehungsweise es wird umgekehrt bei Auftreffen eines Ultraschallsignals aus dem Inneren der Leitung 12 auf den Teilbereich 24 der Schwingkörper 26 zum Schwingen angeregt. Vereinfachend ist in Figur 1b von dem Ultraschallwandler 16 nur der Schwingkörper 26 gezeigt. Der dünnwandige Teilbereich 24 bleibt stabil genug, um einem zu erwartenden Leitungsinnendruck standzuhalten. Die Leitungswand 20 bildet eine in sich geschlossene Innenfläche ohne Vertiefungen oder Vorsprünge, welche die Strömung stören oder an welchen sich Ablagerungen absetzen könnten.

Wie durch Schallausbreitungslinien 28 angedeutet, ist die Abstrahl- beziehungsweise Einstrahlrichtung der Ultraschallwandler 16 senkrecht zu einer Mittenachse der Leitung 12. Um dennoch einen axialen Versatz Δx und damit einen Messeffekt bei einem Laufzeitdifferenzverfahren zu erzielen, ist eine relativ breite Abstrahlcharakteristik vorgesehen. Alternativ ist vorstellbar, den Ultraschallwandler 16 schräg anzuordnen, wobei dies aber konstruktiv aufwändiger ist und womöglich auch Modifikationen der Leitungswand 20 erfordert, die sich auch auf die Strömung auswirken.

Figur 1c zeigt nochmals das Paar Ultraschallwandler 16a-b der Figur 1a diesmal in einer Querschnittsansicht. Die diametrale Anordnung ist rein beispielhaft, der Messpfad 18 kann auch neben der Achse der Leitung 12 liegen. Der Winkel, den der Messpfad 18 dann mit dem Durchmesser der Leitung 12 einschließt, wird als Sekantenwinkel bezeichnet.

Bei einer Clamp-On- oder Clamp-In-Montage, ebenso bei unzureichender Dämpfung von intrusiv angeordneten Ultraschallwandlern 16a-b, entsteht neben dem gewünschten Fluidschall, mit dem die Laufzeiten gemessen werden, auch Körper- oder Strukturschall, der sich durch die Leitung 12 fortpflanzt und der ebenfalls den gegenüberliegenden Ultraschallwandler 16a-b beispielsweise auf dem durch einen Pfeil 30 angedeuteten Ausbreitungsweg erreicht. Der Strukturschall wird nicht von der Strömung beeinflusst und enthält deshalb auch keine nützliche Messinformation über die Strömungsgeschwindigkeit, regt aber ebenfalls den gegenüberliegenden Ultraschallwandler 16a-b sogar mit der gleichen Frequenz an. Diese Überlagerung von Fluidschall und Strukturschall führt zu Messfehlern.

Dies soll nun in einer zunächst stark vereinfachten mathematischen Betrachtung der Wirkung des Strukturschalls auf die Laufzeitmessung näher untersucht werden. Üblicherweise weisen bei einer realen Differenzlaufzeitmessung sowohl Fluid- als auch Strukturschall mehrere zeitlich begrenzte Pulse auf, die sich im Allgemeinen überlappen. Als Vereinfachung sei jedoch angenommen, dass Fluid- wie Strukturschall monofrequente harmonische Schwingungen gleicher Frequenz und jeweils konstanter Amplitude darstellen, die nach ihrer entsprechenden Laufzeit durch das Fluid beziehungsweise die Leitung 12 von dem empfangenden Ultraschallwandler 16a-b detektiert werden.

Außerdem soll es als weitere Vereinfachung nur ein Strukturschallsignal mit einer zugehörigen Schallgeschwindigkeit geben. Tatsächlich wären regelmäßig mehrere Strukturschallschallmoden mit unterschiedlichen Schallgeschwindigkeiten und möglicherweise dispersivem Verhalten vorhanden. Unter den genannten Voraussetzungen ergibt sich folgende Modellierung der Signalanteile:

$$\text{Signal}_{\text{Fluid}-\text{AB/BA}} = \begin{cases} A_{\text{Fluid}} * \sin(\omega t + \varphi_{\text{Fluid}-\text{AB/BA}}), & t \geq \text{TOF}_{\text{Fluid}} \\ 0, & t < \text{TOF}_{\text{Fluid}} \end{cases},$$

$$\text{Signal}_{\text{Struktur}} = \begin{cases} A_{\text{Struktur}} * \sin(\omega t + \varphi_{\text{Struktur}}), & t \geq \text{TOF}_{\text{Struktur}} \\ 0, & t < \text{TOF}_{\text{Struktur}} \end{cases}.$$

Hierbei sind $A_{\text{Fluid}}$ und $A_{\text{Struktur}}$ die Amplituden von Fluid- bzw. Strukturanteil, $\omega$ die Arbeitskreisfrequenz der Ultraschallwandler 16a-b, t die Zeit und $\varphi_{\text{Fluid}-\text{AB/BA}}$, $\varphi_{\text{Struktur}}$ die Phasenlagen der Signale am empfangenden Ultraschallwandler 16a-b. Letztere sollen sich dabei auf die Eintreffzeit (TOF, Time of Flight) eines ungestörten Fluidsignals im strömungslosen Fall beziehen (*VOF* - Velocity of fluid). Es gilt folglich $\varphi_{\text{Fluid-AB}} = \varphi_{\text{Fluid-BA}} = 0$ bei VOF = 0.

Bei endlicher Strömungsgeschwindigkeit (VOF) ändern sich die Absolutlaufzeiten und damit die Phasen der Fluidsignale näherungsweise symmetrisch für die beiden Messrichtungen, und es ist somit $\varphi_{\text{Fluid}-\text{AB}} \approx -\frac{\Delta t}{2} * \omega$,

$\varphi_{\text{Fluid}-\text{BA}} \approx \frac{\Delta t}{2} * \omega$ für VOF ≠ 0.

Die sich ergebende Laufzeitdifferenz (Δt) hängt dabei neben der Strömungsgeschwindigkeit auch von der Schallgeschwindigkeit des Fluids (SOS$_{Fluid}$) und linear vom axialen Abstand $\Delta x$ ab:

$$\Delta t = \frac{VOF}{SOS_{Fluid}^2} * \Delta x.$$

Diese Linearität in $\Delta x$ kann später vorteilhaft für die Auswertung und Kompensation systematischer Messfehler durch Strukturschall ausgenutzt werden.

Die Phase des Strukturschalls ist unabhängig von der Strömung in der Leitung 12 und ergibt sich aus der Absolutlaufzeitdifferenz von Struktur- und Fluidschall im strömungslosen Fall:

$$\varphi_{Struktur} = \omega * (TOF_{Struktur} - TOF_{Fluid-VOF=0}),$$

$$\varphi_{Struktur} = \omega * \left( \frac{L_{Struktur}}{SOS_{Struktur}} - \frac{L_{Fluid}}{SOS_{Fluid}} \right).$$

Hierbei bezeichnet L die jeweilige Wegstrecke durch das Fluid beziehungsweise durch die Leitungswand 20.

Der empfangende Ultraschallwandler 16a-b misst für Zeiten $t \geq TOF_{Fluid} > TOF_{struktur}$ je nach Messrichtung immer die folgende Überlagerung von Fluid- und Strukturschall:

$$Signal_{AB} = A_{Fluid} * \sin(\omega t + \varphi_{Fluid-AB}) + A_{Struktur} * \sin(\omega t + \varphi_{Struktur}),$$

$$Signal_{BA} = A_{Fluid} * \sin(\omega t + \varphi_{Fluid-BA}) + A_{Struktur} * \sin(\omega t + \varphi_{Struktur}).$$

Messgröße ist die sich einstellende effektive Phasendifferenz $\delta$ der überlagerten Signale aus Hin- und Rückrichtung, da diese genau der in dem Ultraschalldurchflussmesser 10 bestimmten Laufzeitdifferenz entspricht. Die Berechnung geht von dem folgenden Additionstheorem für Winkelfunktionen aus:

$$A_1 * \sin(x + \varphi_1) + A_2 * \sin(x + \varphi_2) = \sqrt{A_1^2 + A_2^2 + 2A_1 A_2 \cos(\varphi_1 - \varphi_2)} * \sin(x + \delta).$$

Von Interesse ist die sich ergebende Phase $\delta$ der Überlagerung, für die gilt:

$$\delta = \arctan\left( \frac{A_1 \sin(\varphi_1) + A_2 \sin(\varphi_2)}{A_1 \cos(\varphi_1) + A_2 \cos(\varphi_2)} \right).$$

Wendet man dies die Überlagerungen Signal$_{AB}$, Signal$_{BA}$ an, so lassen sich Phasendifferenz $\Delta\delta$ beziehungsweise gemessene Laufzeitdifferenz $\Delta t_{res}$ zwischen den Messrichtungen direkt aus den Argumenten der Sinus-Funktion ablesen:

$$\omega * \Delta t_{res} = \Delta\delta = \delta_{BA} - \delta_{AB}.$$

Daraus ergibt sich, wenn die eingangs angegebenen Signalanteile in die aus dem Additionstheorem folgende Formel für die Phase $\delta$ der Überlagerung eingesetzt wird,

$$\Delta\delta = \arctan\left(\frac{A_{Fluid}\sin\left(\frac{\Delta t}{2}*\omega\right) + A_{Struktur}\sin(\varphi_{Struktur})}{A_{Fluid}\cos\left(\frac{\Delta t}{2}*\omega\right) + A_{Struktur}\cos(\varphi_{Struktur})}\right)$$

$$- \arctan\left(\frac{A_{Fluid}\sin\left(-\frac{\Delta t}{2}*\omega\right) + A_{Struktur}\sin(\varphi_{Struktur})}{A_{Fluid}\cos\left(-\frac{\Delta t}{2}*\omega\right) + A_{Struktur}\cos(\varphi_{Struktur})}\right).$$

Für den ungestörten Fall ($A_{Struktur}$ = 0) vereinfacht sich der Ausdruck wie erwartet wieder zu:

$$\Delta\delta(A_{Struktur} = 0) = \frac{\Delta t}{2}*\omega - \left(-\frac{\Delta t}{2}*\omega\right) = \Delta t * \omega.$$

Die Laufzeitdifferenz und damit auch die Phasendifferenz sind, wie oben in der Formel für $\Delta t$ angegeben, allein durch den axialen Abstand $\Delta x$ sowie die Strömungsgeschwindigkeit und Fluidschallgeschwindigkeit bestimmt. Im gestörten Fall mit $A_{Struktur}$ > 0 kommen als zusätzliche Einflussgrößen die Amplituden $A_{Fluid}$ und $A_{Struktur}$ beziehungsweise deren Verhältnis sowie die relative Phase $\varphi_{Struktur}$ des Strukturschalls hinzu. Letztere hängt wie oben angegeben von Fluidweglänge und Strukturweglänge sowie von Fluidschallgeschwindigkeit und Strukturschallgeschwindigkeit beider Signalanteile ab. Änderungen in den Weglängen oder/und in den Schallgeschwindigkeiten ändern die relative Phase $\varphi_{Struktur}$ des Strukturschalls.

Im Folgenden soll nun der Fall betrachtet werden, dass Amplituden, Schallgeschwindigkeiten sowie die Strömungsgeschwindigkeit konstant sind, während der axiale Abstand $\Delta x$ der Ultraschallwandler 16a-b in longitudinaler Richtung oder entlang der Leitungsachse variiert wird. Rückwirkungen ergeben sich hierbei zum einen auf die Fluidlaufzeitdifferenz $\Delta t$ sowie auf die Weglängen L beider Signalanteile und damit auf die relative Phase des Strukturschalls $\varphi_{Struktur}$. Für einen Diametralpfad wie in Figur 1a gilt für die Weglängen

$$L_{Fluid} = \sqrt{D_i^2 + \Delta x^2}$$

und

$$L_{Struktur} = \sqrt{\left((D_i + W)\frac{\pi}{2}\right)^2 + \Delta x^2}.$$

Hierbei sind $D_i$ der innere Durchmesser der Leitung 12 und W die Wandstärke der Leitungswand 20.

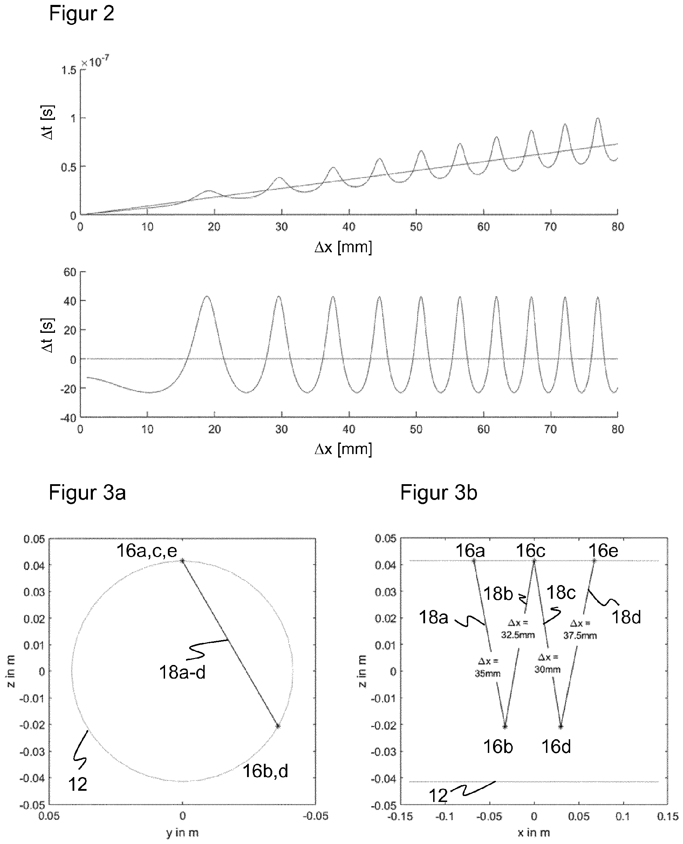

Figur 2 zeigt ein Beispiel für die Funktion der Laufzeitdifferenzen in Abhängigkeit von dem axialen Abstand $\Delta x$ für Werte zwischen 0 und 80mm gemäß diesem Modell, in dem die Laufzeitdifferenz sich gemäß der oben angegebenen Formel für $\Delta\delta$ verhält. Dabei ist im oberen Teil die Laufzeitdifferenz und im unteren Teil der relative Fehler zum ungestörten Fall dargestellt. Es wurde ein DN80-Rohr mit 4mm Wandstärke als Leitung 12, eine Strömungsgeschwindigkeit von 1m/s und eine Wandlerfrequenz der Ultraschallwandler 16a-b von 700kHz angenommen. Weiter ist für den Fluidschall eine Schallgeschwindigkeit von 1480m/s bei einer Amplitude von 1 und für den Strukturschall eine Schallgeschwindigkeit von 3000m/s bei einer Amplitude von 0,3 gewählt.

Zusätzlich eingezeichnet ist der ungestörte Fall $A_{Struktur}$ = 0, der wie erwartet durch einen linearen Zusammenhang zwischen Laufzeitdifferenz und axialem Abstand $\Delta x$ beschrieben ist. Ist dem Fluidschall hingegen Strukturschall überlagert, wird dieser lineare Verlauf durch eine asymmetrische, nicht-harmonische Oszillation moduliert, die je nach Position der Ultraschallwandler 16a-b erhebliche Fehler der gemessenen Laufzeitdifferenz gegenüber reinem Fluidschall verursacht. Die Amplitude der Oszillation und damit die Höhe des maximalen Fehlers hängen von dem Amplitudenverhältnis der Signalanteile ab. Bei dem hier gewählten Verhältnis Strukturschall zu Fluidschall von 3:10 beträgt der maximale Fehler etwa 43%.

Die Periodizität der Störung lässt sich nicht explizit angeben, ergibt sich allerdings implizit aus der Forderung $\varphi_{Struktur}(\Delta x_2 - \Delta x_1) = 2\pi$, die ebenfalls aus dem oben angenommenen Modell abgeleitet ist. Die Periodizität hängt damit von den Weglängen und Schallgeschwindigkeiten von Fluid- und Strukturschall ab. Während man die Weglängen im Rahmen des Gerätedesigns bestimmen kann, ist die Fluidschallgeschwindigkeit ein unter Umständen stark variierender Prozessparameter, der geräteseitig nicht vorhersagbar ist. Ein einzelner Messpfad 18 kann somit je nach Fluidschallgeschwindigkeit alle im Rahmen der auftretenden Oszillation möglichen Fehlerbeiträge des Strukturschalls erfahren. Im hier betrachteten Beispiel ergibt sich dadurch ein ganz erhebliches Fehlerband von etwa 65% (-20% bis 45%).

Figur 3a zeigt in einer Querschnitts- und Figur 3b in einer Längsschnittansicht ein beispielhaftes Layout von Messpfaden 18a-d, welches verschiedene axiale Abstände $\Delta x$ der Ultraschallwandler 16a-e realisiert, die jeweils einen Messpfad 18a-d aufspannen. Damit sollen die soeben gewonnenen Erkenntnisse über den Einfluss von Strukturschall auf die Laufzeitdifferenzen genutzt werden, um letztlich die Effekte der oszillierenden Modulation zu kompensieren. Dabei ist anzumerken, dass zwar bei der Betrachtung des Modells stark vereinfachende Annahmen getroffen wurden, die wesentlichen Aussagen und Folgerungen jedoch in Simulationen der Erfinder Bestand haben, in denen diese Vereinfachungen nicht mehr vorausgesetzt werden.

Die axialen Abstände $\Delta x$ und damit die Pfadlängen sind so zu wählen, dass die Oszillation der Laufzeitdifferenz für möglichst alle praxisrelevanten, jedoch im konkreten Fall unbekannten Schallgeschwindigkeiten des Fluids ausreichend abgetastet wird. Ausschlaggebend sind hier die Schallgeschwindigkeiten von Fluid und Leitungswand 20, sowie die Weglängenverhältnisse, die wiederum vom Leitungsdurchmesser und den realisierbaren Pfadwinkeln abhängen.

Im dargestellten Beispiel mit einem DN80-Rohr und realistischen Fluidschallgeschwindigkeiten zwischen 1200 und 2000m/s ist eine Abstufung der axialen Abstände $\Delta x$ von höchstens 3 mm vorteilhaft. In Figur 3 ist ein Sekantenwinkel von 30° gewählt, d.h. ein Winkel gegen den senkrechten Querschnittsdurchmesser, und die axialen Abstände $\Delta x$ betragen zwischen 30 mm und 37,5 mm wie in Figur 3b angegeben. Selbstverständlich sind andere Zahlenwerte für Sekantenwinkel, axiale Abstände $\Delta x$ und insgesamt ein anderes Pfadlayout möglich.

Wie in Figur 3 zu erkennen, ist es vorteilhaft, die Messpfade 18a-d in einer gemeinsamen longitudinalen Ebene parallel zur Leitungsachse anzuordnen. Bei ebenfalls vorteilhaftem gleichem Sekantenwinkel fallen sie dann in der Querschnittsansicht der Figur 3a zusammen, liegen also hintereinander. In der Längsschnittansicht der Figur 3b wird zudem eine Art Sägezahn- oder Zickzackmuster der Messpfade 18a-d erkennbar. Das hat zum einen den Vorteil, dass die Messpfade 18a-d direkt hintereinander liegen. Man darf annehmen, dass sich die Strömung auf dieser kurzen Strecke nicht spürbar verändert, so dass die Messpfade 18a-d praktisch dieselbe Strömungskomponente vermessen und tatsächlich wie gewünscht nur in dem axialen Abstand $\Delta x$ eine Variation erfolgt.

Die Sägezahnanordnung hat den Vorteil, dass die mittleren Ultraschallwandler 16b-d in Doppelfunktion an jeweils zwei angrenzenden Messpfaden 18a-d beteiligt sind, so dass mit nur fünf Ultraschallwandlern 16a-e statt acht Ultraschallwandlern vier Messpfade 18a-d möglich werden. Dafür genügt ein vergleichsweise kleiner Abstrahlwinkel, der gemäß der Anordnung in Figur 1b auch für einen Messpfad 18a-d schon erforderlich wäre. Durch die alternierende Anordnung gibt es auch keine baulichen Probleme zwischen den Ultraschallwandlern 16a,c,e; 16b,d auf einer Seite. Dennoch sind auch andere Anordnungen vorstellbar, die auf die Doppelfunktion verzichten oder sie in Mischformen nur für einen Teil der Messpfade verwirklichen. Ein Beispiel ist ein Ultraschallwandler auf der einen Seite der Leitung 12, dem mehrere Ultraschallwandler mit wachsendem axialem Abstand $\Delta x$ gegenüberliegen. Auch die Anzahl von Messpfaden 18a-d kann variiert werden. Zusätzliche Messpfade bringen eine bessere Abtastung der Oszillation, bedeuten aber auch mehr Aufwand, so dass hier abgewogen werden muss. Weniger Messpfade sind prinzipiell auch denkbar, wobei aber bedacht werden muss, dass schon eine regelmäßige Oszillation erst durch vier Punkte rekonstruierbar ist, so dass hier mit Genauigkeitseinbußen zu rechnen ist.

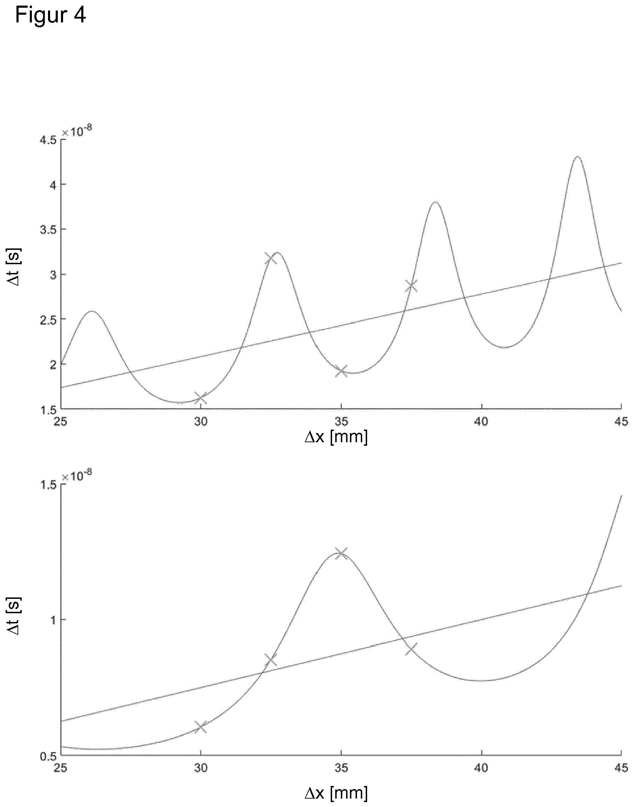

Figur 4 ist eine Darstellung der Oszillation, die ähnlich Figur 2 oben und bei vergleichbaren Bedingungen für nicht explizit anders genannte Parameter aus der Formel für $\Delta\delta$ gewonnen wurde. Dabei ist im oberen Teil eine Fluidschallgeschwindigkeit von 1200m/s und im unteren Teil von 2000m/s angenommen, und der Bereich für den axialen Abstand $\Delta x$ auf der X-Achse wurde auf einen relevanten Ausschnitt um die axialen Abstände $\Delta x$ des Pfadlayouts gemäß Figur 3 beschränkt.

Im Betrieb werden nun die Laufzeitdifferenzen auf den verschiedenen Messpfaden 18a-d bestimmt und dem jeweiligen axialen Abstand $\Delta x$ des Messpfades 18a-d zugeordnet. Dadurch entstehen bei einem Vier-Pfadlayout wie in Figur 3 vier Werte, die in Figur 4 als X markiert sind. Es ist denkbar, diese Werte wiederholt zu messen und zu mitteln. Aus den vier Werten wird dann die Oszillation rekonstruiert, um ihren Einfluss herauszurechnen.

Eine vorteilhafte Möglichkeit hierfür ist eine lineare Anpassung. Das bietet sich nicht nur wegen des vergleichsweise geringen Rechenaufwands an, sondern auch deshalb, weil die oben abgeleitete Beziehung für die Laufzeitdifferenz ohne Einfluss des Strukturschalls linear in $\Delta x$ ist. Ein lineares Verhalten entspricht also dem gesuchten Fall des reinen Fluidschalls. Da bei einem verschwindenden axialen Abstand $\Delta x$ auch keine Laufzeitdifferenz auftritt, kann die Gerade der linearen Anpassung ohne Y-Achsenabschnitt gefittet werden.

Im Prinzip könnte nun an jedem Punkt der ermittelten Geraden die Laufzeitdifferenz abgelesen und über den zugehörigen axialen Abstand $\Delta x$ auf eine Weglänge geschlossen werden, um die Strömungsgeschwindigkeit zu berechnen. Es ist aber zu erwarten, dass die Gerade die Verhältnisse im Bereich der tatsächlichen Stützpunkte besonders treu wiedergibt, nicht nur wegen unvermeidlicher Messschwankungen, sondern auch wegen der nicht gleichmäßigen Oszillation. Daher wird vorzugsweise im Bereich der Stützpunkte abgelesen, insbesondere an einer Stelle, die dem Mittelwert der realisierten axialen Abstände Δx entspricht. Hier wird die höchste Güte der mathematischen Anpassung erwartet.

Bezeichnet man die abgelesenen Werte an der soeben bezeichneten oder einer anderen Stelle der Geraden als $\Delta t_{eff}$ und $\Delta x_{eff}$ und setzt voraus, dass zusätzlich die Fluidschallgeschwindigkeit auf andere Weise bekannt ist, so ergibt sich aus den Überlegungen des Modells oben eine effektive Pfadgeschwindigkeit von

$$VOF_{eff} = \frac{\Delta t_{eff}}{\Delta x_{eff}} * SOS_{Fluid}^2.$$

Wie schon erwähnt, gilt dies für den idealisierten Fall, dass alle Messpfade 18a-d eine gleiche Strömungssituation vermessen. Ansonsten treten bei der linearen Anpassung Abweichungen auf. Es ist daher vorteilhaft, wenn die Messpfade 18a-d in radialer Richtung nicht voneinander abweichen, da in einer praxisrelevanten Installation keine rotationssymmetrischen Strömungsprofile erwartet werden können. Die Strömungsprofileffekte werden minimiert, wenn die Messpfade 18a-d wie im Beispiel der Figur 3 in Längsrichtung parallel zur Leitungsachse direkt hintereinander angeordnet sind. Dann darf berechtigt davon ausgegangen werden, dass auf dem sehr kurzen Stück in Längsrichtung keine großen Änderungen im Strömungsprofil auftreten. Um auch Strömungsunterschiede in radialer Richtung zu berücksichtigen, können wie schon erwähnt zusätzliche Gruppen entsprechend den Messpfaden 18a-d in einer anderen Lage bezüglich des Querschnitts gebildet werden, die dann gruppenweise den Pfaden eines klassischen Mehrpfadzählers entsprechen.

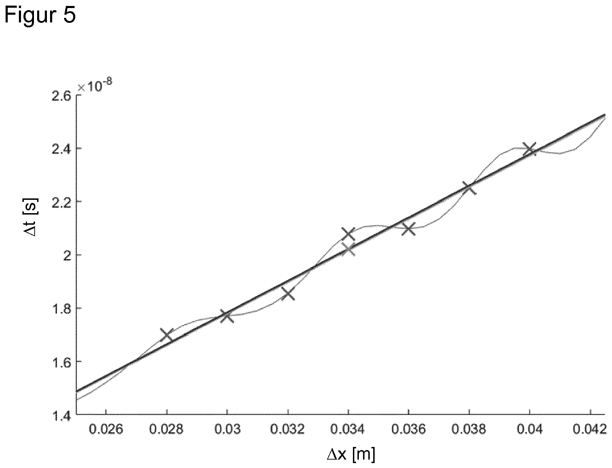

Figur 5 zeigt nochmals eine Darstellung der Oszillation beziehungsweise der Funktion der Laufzeitdifferenz in Abhängigkeit von dem axialen Abstand Δx ähnlich Figur 4, jedoch für ein anderes Beispiel. Hier sind sieben statt vier Messpfade vorgesehen, deren axialer Abstand Δx um jeweils 2 mm variiert. Die auf den Messpfaden bestimmten Laufzeitdifferenzen werden dem axialen Abstand Δx des jeweiligen Messpfades zugeordnet und sind entsprechend als X markiert.

In Figur 5 wird hier nicht das bislang vorgestellte einfache Modell verwendet, um die Oszillation zu bestimmen, sondern eine deutlich realitätsnähere Simulation mit realistischen Signalformen und Amplitudenverhältnissen sowie drei Strukturschallmoden mit jeweils eigenen Schallgeschwindigkeiten und eigenem Dispersionsverhalten. Die sich ergebende Oszillation weist eine leicht unterschiedliche Charakteristik auf, unterscheidet sich aber qualitativ nur wenig und erlaubt ersichtlich weiterhin eine Auswertung, wie sie oben beschrieben wurde. Insbesondere ist eine lineare Anpassung möglich, die als Gerade in Figur 5 eingezeichnet ist und die den theoretischen Verlauf einer ungestörten Messung nur des Fluidschalls ohne Strukturschall rekonstruiert. Erneut ist es vorteilhaft, der weiteren Auswertung nicht irgendeinen Punkt der Geraden, sondern den Schwerpunkt der axialen Abstände Δx zugrunde zu legen, mit denen tatsächlich gemessen wurde. Das ist in Figur 5 durch das untere X bei einem axialen Abstand Δx von 34 mm eingezeichnet.

**Patentansprüche**

1. Ultraschall-Durchflussmessvorrichtung (10) ausgeführt zum Bestimmen der Strömungsgeschwindigkeit eines in einer Leitung (12) strömenden Fluids mit mehreren Ultraschallwandlern (16a-e), die mehrere Messpfade (18a-d), an denen jeweils zwei der Ultraschallwandler (16a-e) einander gegenüberliegend mit der Strömung dazwischen und einem gegenseitigen axialen Abstand (Δx) in longitudinaler Richtung der Leitung (12) angeordnet sind, und eine Auswertungseinheit aufweist, die dafür ausgebildet ist, die Strömungsgeschwindigkeit aus Laufzeitdifferenzen von Ultraschallsignalen längs der jeweiligen Messpfade (18a-d) in Richtung mit der Strömung und gegen die Strömung zu berechnen, wobei die Messpfade (18a-d) einen unterschiedlichen axialen Versatz (Δx) aufweisen,
**dadurch gekennzeichnet,**
**dass** die Auswertungseinheit dafür ausgebildet ist, mindestens eine charakteristische Größe einer Funktion, welche die eine Oszillation bildende Abhängigkeit der Laufzeitdifferenz von dem axialen Abstand (Δx) der Ultraschallwandler (16a-e) beschreibt, aus den mehreren Messungen an den mehreren Messpfaden (18a-d) durch lineare Anpassung oder Rekonstruktion der Oszillation zu schätzen, und aus der charakteristischen Größe die Strömungsgeschwindigkeit zu berechnen.

2. Ultraschall-Durchflussmessvorrichtung (10) nach Anspruch 1,
wobei die Messpfade (18a-d) in einer gemeinsamen, zu der Leitung (12) parallelen Ebene angeordnet sind.

3. Ultraschall-Durchflussmessvorrichtung (10) nach Anspruch 1 oder 2,
wobei die Messpfade (18a-d) unmittelbar hintereinander angeordnet sind.

**4.** Ultraschall-Durchflussmessvorrichtung (10) nach einem der vorhergehenden Ansprüche,
wobei die Messpfade (18a-d) gemeinsam eine Sägezahnform bilden.

**5.** Ultraschall-Durchflussmessvorrichtung (10) nach Anspruch 4,
wobei Ultraschallwandler (16a-e) an Spitzen der Sägezahnform an beiden angrenzenden Messpfaden (18a-d) beteiligt sind.

**6.** Ultraschall-Durchflussmessvorrichtung (10) nach einem der vorhergehenden Ansprüche,
wobei die Auswertungseinheit dafür ausgebildet ist, für die lineare Anpassung bei verschwindendem axialem Abstand ($\Delta$x) auch eine verschwindende Laufzeitdifferenz anzunehmen.

**7.** Ultraschall-Durchflussmessvorrichtung (10) nach einem der vorhergehenden Ansprüche,
wobei die Auswertungseinheit dafür ausgebildet ist, eine kompensierte Laufzeit oder Laufzeitdifferenz aus der linearen Anpassung bei einem axialen Abstand ($\Delta$x) zu bestimmen, welcher einem Mittelwert der axialen Abstände ($\Delta$x) der Messpfade (18a-d) entspricht.

**8.** Ultraschall-Durchflussmessvorrichtung (10) nach einem der vorhergehenden Ansprüche,
wobei mindestens vier Messpfade (18a-d) vorgesehen sind.

**9.** Ultraschall-Durchflussmessvorrichtung (10) nach einem der vorhergehenden Ansprüche,
wobei die Ultraschallwandler (16a-e) von außen an die Leitung (12) angebracht sind.

**10.** Ultraschall-Durchflussmessvorrichtung (10) nach Anspruch 9,
wobei eine Leitungswand (20) der Leitung (12) mehrere Taschen (22) aufweist, in denen nach innen ein dünnwandiger Bereich (24) verbleibt, wobei die Ultraschallwandler (16a-e) in jeweils einer Tasche (22) angeordnet sind und einen Schwingkörper (26) aufweisen, der an dem dünnwandigen Bereich (24) ankoppelt ist, der als schwingungsfähige Membran des Ultraschallwandlers (16a-e) wirkt.

**11.** Verfahren zum Bestimmen der Strömungsgeschwindigkeit eines in einer Leitung (12) strömenden Fluids mit einer Ultraschall-Durchflussmessvorrichtung (10) nach einem der vorhergehenden Ansprüche, bei dem längs mehrerer Messpfade (16a-e), die von jeweils zwei Ultraschallwandlern (16a-e) mit der Strömung dazwischen und einem gegenseitigen axialen Abstand ($\Delta$x) in longitudinaler Richtung der Leitung (12) aufgespannt werden, Ultraschallsignale in Richtung mit und gegen die Strömung ausgesandt und empfangen werden und die Strömungsgeschwindigkeit aus Laufzeitdifferenzen der Ultraschallsignale berechnet wird, wobei die Messpfade (18a-d) einen unterschiedlichen axialen Versatz ($\Delta$x) aufweisen,
**dadurch gekennzeichnet,**
**dass** die Messungen einer Laufzeitdifferenz längs eines jeweiligen Messpfades (18a-d) als Stützstelle einer Funktion aufgefasst werden, welche die eine Oszillation bildende Abhängigkeit der Laufzeitdifferenz von dem axialen Abstand ($\Delta$x) beschreibt, und wobei die Funktion aus den Messungen rekonstruiert, angenähert, interpoliert oder durch lineare Anpassung eine charakteristische Größe der Funktion bestimmt wird.

**12.** Verfahren nach Anspruch 11,
wobei die Strömungsgeschwindigkeit aus einem Wert der Funktion an einem axialen Abstand ($\Delta$x) bestimmt wird, welcher dem Schwerpunkt der axialen Abstände ($\Delta$x) der Messpfade (18a-d) entspricht.

**Claims**

**1.** An ultrasonic flowmeter device (10) configured to determine the flow velocity of a fluid flowing in a line (12), comprising a plurality of ultrasonic transducers (16a-e) having a plurality of measuring paths (18a-d) at each of which two of the ultrasonic transducers (16a-e) are arranged opposite to one another with the flow therebetween at a mutual axial distance ($\Delta$x) in the longitudinal direction of the line (12), and comprising an evaluation unit which is configured to calculate the flow velocity from time of flight differences of ultrasonic signals along the respective measuring paths (18a-d) in the direction with the flow and against the flow, the measuring paths (18a-d) having a different axial offset ($\Delta$x),
**characterized in that** the evaluation unit is configured to estimate, from the plurality of measurements on the plurality of measuring paths (18a-d), at least one characteristic value of a function which describes the oscillatory dependence of the time of flight difference on the axial distance ($\Delta$x) of the ultrasonic transducer (16a-e) by linear adaption or reconstruction of the oscillation, and to calculate the flow velocity from the characteristic value.

2. The ultrasonic flowmeter (10) according to claim 1,
   wherein the measuring paths (18a-d) are arranged in a common plane parallel to the line (12).

3. The ultrasonic flowmeter (10) according to claim 1 or 2,
   wherein the measuring paths (18a-d) are arranged directly one behind the other.

4. The ultrasonic flowmeter device (10) according to one of the preceding claims, wherein the measuring paths (18a-d) together form a sawtooth shape.

5. The ultrasonic flowmeter (10) according to claim 4,
   wherein ultrasonic transducers (16a-e) at tips of the sawtooth shape are involved at both adjacent measuring paths (18a-d).

6. The ultrasonic flowmeter device (10) according to one of the preceding claims,
   wherein the evaluation unit is configured to assume a zero time of flight difference at zero axial distance ($\triangle$x) in the linear adaption.

7. The ultrasonic flowmeter device (10) according to one of the preceding claims,
   wherein the evaluation unit is configured to determine a compensated time of flight or time of flight difference from the linear adaptation at an axial distance ($\triangle$x) which corresponds to an average value of the axial distances ($\triangle$x) of the measuring paths (18a-d).

8. The ultrasonic flowmeter device (10) according to one of the preceding claims,
   wherein at least four measuring paths (18a-d) are provided.

9. The ultrasonic flowmeter device (10) according to one of the preceding claims,
   wherein the ultrasonic transducers (16a-e) are externally attached to the line (12).

10. The ultrasonic flowmeter (10) according to claim 10,
    wherein a a line wall (20) of the line (12) has a plurality of pockets (22) in which a thin-walled region (24) remains inwardly, the ultrasonic transducers (16a-e) each being arranged in a pocket (22) and having a vibrating body (26) which is coupled to the thin-walled region (24) which acts as a vibrating membrane of the ultrasonic transducer (16a-e).

11. A method for determining the flow velocity of a fluid flowing in a line (12) with an ultrasonic flowmeter device (10) according to one of the preceding claims,
    wherein, along a plurality of measuring paths (16a-e) which are each formed by two ultrasonic transducers (16a-e) at a mutual axial distance ($\triangle$x) in the longitudinal direction of the line (12) with the flow between them, ultrasonic signals are transmitted and received in the direction with and against the flow, and wherein the flow velocity is calculated from time of flight differences of the ultrasonic signals, the measuring paths (18a-d) having a different axial offset ($\triangle$x),
    **characterized in that** the measurements of a time of flight difference along a respective measuring path (18a-d) are used as sampling points of a function describing the oscillatory dependency of the time of flight difference on the axial distance ($\triangle$x), and wherein the function is reconstructed, approximated or interpolated from the measurements, or a characteristic value of the function is determined by linear adaption.

12. The method according to claim 11,
    wherein the flow velocity is determined from a value of the function at an axial distance ($\triangle$x), which is corresponds to the center of gravity of the axial distances ($\triangle$x) of the measuring paths (18a-d).

**Revendications**

1. Dispositif de mesure de débit à ultrasons (10) réalisé pour déterminer la vitesse d'écoulement d'un fluide s'écoulant dans un conduit (12) pourvu de plusieurs transducteurs à ultrasons (16a - e), comportant plusieurs trajets de mesure (18a - d) sur chacun desquels deux des transducteurs à ultrasons (16a - e) sont disposés à l'opposé l'un de l'autre avec l'écoulement entre eux et à une distance axiale mutuelle ($\triangle$x) dans la direction longitudinale du conduit (12), et une unité d'évaluation qui est réalisée pour calculer la vitesse d'écoulement à partir de différences de temps de parcours de signaux ultrasonores le long des trajets de mesure respectifs (18a - d) dans la direction de l'écoulement et en sens opposé à l'écoulement, les trajets de mesure (18a - d) présentant un décalage axial ($\Delta$x) différent, **caractérisé en ce que** l'unité d'évaluation est réalisée pour estimer au moins une grandeur caractéristique d'une fonction qui décrit la dépendance, formant une oscillation, de la différence de temps de parcours par rapport à la distance axiale ($\Delta$x) des transducteurs à ultrasons (16a - e), à partir de la pluralité de mesures sur lesdits plusieurs trajets de mesure (18a - d) par adaptation linéaire ou par reconstruction de l'oscillation, et pour calculer la vitesse d'écoulement à partir de la grandeur caractéristique.

2. Dispositif de mesure de débit à ultrasons (10) selon la revendication 1,
   dans lequel les trajets de mesure (18a - d) sont disposés dans un plan commun parallèle au conduit (12).

3. Dispositif de mesure de débit à ultrasons (10) selon la revendication 1 ou 2,
   dans lequel les trajets de mesure (18a - d) sont disposés directement les uns derrière les autres.

4. Dispositif de mesure de débit à ultrasons (10) selon l'une des revendications précédentes,
   dans lequel les trajets de mesure (18a - d) forment conjointement une forme en dents de scie.

5. Dispositif de mesure de débit à ultrasons (10) selon la revendication 4, dans lequel des transducteurs à ultrasons (16a - e) situés aux pointes de la forme en dents de scie sont impliqués dans les deux trajets de mesure (18a - d) adjacents.

6. Dispositif de mesure de débit à ultrasons (10) selon l'une des revendications précédentes,
   dans lequel l'unité d'évaluation est réalisée pour supposer une décroissance de la différence de temps de parcours lors d'une décroissance de la distance axiale ($\Delta$x), pour l'adaptation linéaire.

7. Dispositif de mesure de débit à ultrasons (10) selon l'une des revendications précédentes,
   dans lequel l'unité d'évaluation est réalisée pour déterminer à partir de l'adaptation linéaire un temps de parcours ou une différence de temps de parcours compensé(e), à une distance axiale ($\Delta$x) qui correspond à une valeur moyenne des distances axiales ($\Delta$x) des trajets de mesure (18a - d).

8. Dispositif de mesure de débit à ultrasons (10) selon l'une des revendications précédentes,
   dans lequel il est prévu au moins quatre trajets de mesure (18a - d).

9. Dispositif de mesure de débit à ultrasons (10) selon l'une des revendications précédentes,
   dans lequel les transducteurs à ultrasons (16a - e) sont montés depuis l'extérieur sur le conduit (12).

10. Dispositif de mesure de débit à ultrasons (10) selon la revendication 9,
    dans lequel une paroi (20) du conduit (12) présente plusieurs poches (22) dans lesquelles une zone (24) à paroi mince demeure vers l'intérieur, et les transducteurs à ultrasons (16a - e) sont disposés chacun dans une poche (22) et présentent un corps oscillant (26) qui est couplé à la zone (24) à paroi mince qui fait office de membrane capable d'osciller du transducteur à ultrasons (16a - e).

11. Procédé pour déterminer la vitesse d'écoulement d'un fluide s'écoulant dans un conduit (12) au moyen d'un dispositif de mesure de débit à ultrasons (10) selon l'une des revendications précédentes,
    dans lequel le long de plusieurs trajets de mesure (18a - d) définis par deux transducteurs à ultrasons (16a - e) respectifs avec l'écoulement entre eux et à une distance axiale mutuelle ($\Delta$x) dans la direction longitudinale du conduit (12), des signaux ultrasonores sont émis et reçus dans la direction de l'écoulement et en sens opposé à celui-ci, et la vitesse d'écoulement est calculée à partir de différences de temps de parcours des signaux ultrasonores, les trajets de mesure (18a - d) présentant un décalage axial ($\Delta$x) différent,
    **caractérisé en ce que**
    les mesures de la différence de temps de parcours le long d'un trajet de mesure respectif (18a - d) sont considérées comme un point d'appui d'une fonction qui décrit la dépendance, formant une oscillation, de la différence de temps de parcours par rapport à la distance axiale ($\Delta$x), et
    la fonction est reconstruite, approximée, interpolée à partir des mesures ou une grandeur caractéristique de la fonction est déterminée par adaptation linéaire.

13

**12.** Procédé selon la revendication 11,
dans lequel la vitesse d'écoulement est déterminée à partir d'une valeur de la fonction à une distance axiale ($\Delta x$) qui correspond au centre de gravité des distances axiales ($\Delta x$) des trajets de mesure (18a - d).

Figur 1a

Figur 1c

Figur 1b

Figur 2

Figur 3a

Figur 3b

Figur 4

Figur 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4467659 A
- EP 1378272 B1
- DE 202013105800 U1
- US 7658114 B1
- US 20130174669 A1
- DE 102005047790 A1